# EUROPEAN PATENT SPECIFICATION

(11) **EP 1 342 937 B1**
(45) Date of publication and mention of the grant of the patent: **28.10.2009**
(21) Application number: 03100540.8
(22) Date of filing: 05.03.2003
(51) Int. Cl.: F16H 47/04, F16H 3/72, F16H 3/093, F16H 3/00

(54) **Infinitely variable transmission.**
Stufenlos regelbares Getriebe
Transmission continue de vitesse

(30) Priority: 06.03.2002 GB 0205213
(43) Date of publication of application: 10.09.2003
(73) Proprietor: CNH Belgium N.V., 8210 Zedelgem (BE)
(72) Inventor: Vermeulen, Antoon, 8020 Ruddervoorde-Oostkamp (BE)
(74) Representative: Vandenbroucke, Alberic

(56) References cited:
- EP-A- 0 101 358
- EP-A- 0 886 084
- EP-A- 0 937 600
- EP-A- 1 101 977
- GB-A- 2 002 862

## Description

The present invention relates to an infinitely variable transmission that employs mechanical and hydraulic or electrical transmission elements.

Continuously variable gearboxes are known that rely on the use of a variable hydrostatic transmission. Such a transmission may typically provide a transmission ratio that can be varied continuously from -1.5:1 to +1.5:1. This is considerably less than the range of transmission ratios required between the engine and the driving wheels of a vehicle and of itself a hydrostatic transmission cannot be used as a vehicle gearbox.

It has also been proposed in the prior art to use a hydrostatic transmission in combination with a mechanical transmission to extend the range of gear ratios that can be achieved. The prior art gearbox that most closely resembles the present invention is described in US-A-5,403,241. That gearbox includes a multi-shaft toothed-wheel planetary gearing and a continuously adjustable hydrostatic transmission having toothed-wheel auxiliary transmission stages and gear-changing clutches. The hydrostatic transmission is associated with a displacement-type machine with constant displacement volume. In the planetary gearing, one shaft forms the input shaft to which the adjustable displacement-type machine is connected. A second shaft of the planetary gearing is connected to the constant-volume displacement-type machine. Third and fourth shafts of the planetary gearing represent coupling shafts. The coupling shafts alternately act via at least two auxiliary transmission stages, also called gears, on the output shaft. The coupling shafts change their speeds in such a manner that one coupling shaft becomes steadily faster and the other one becomes steadily slower. They behave in such a manner that they exhibit equal speeds in one extreme position. In the extreme positions of the hydrostatic transmission, gear-changing clutches handle the gear change free of load and without interruption of traction force when the speeds are synchronous. The automatic transmission is controlled and regulated by electronic and hydraulic means.

The present invention in its first aspect seeks to provide a continuously variable hydro-mechanical transmission of simpler construction that provides a wide range of transmission ratios without interruption of power over the entire range.

According to a first aspect of the present invention, there is provided a continuously variable transmission comprising :
- an input shaft,
- a hydrostatic pump driven by the input shaft,
- a hydrostatic motor hydraulically connected to the hydrostatic pump and serving to drive an auxiliary shaft with a continuously variable transmission ratio relative to the input shaft, and
- mechanical gearing for transmitting torque from the input and auxiliary shafts to an output shaft, and
characterised in that :
- the mechanical gearing comprises two planetary gear sets arranged to provide parallel torque paths from the input and auxiliary shafts to the output shaft and coupling means for selectively engaging the planetary gear sets,
- the first planetary gear set, when engaged by the coupling means to transmit torque, comprising a first sun gear connected to the input shaft, a first planetary gear carrier connected to the auxiliary shaft and a first ring gear connected to drive the output shaft,
- the second planetary gear set, when engaged by the coupling means to transmit torque, comprising a second sun gear connected to the auxiliary shaft, a second planetary gear carrier connected to the input shaft and a second ring gear connected to drive the output shaft, and
- the coupling means serving to engage the first planetary gear set for reverse and lower transmission ratios, to engage the second planetary gear set for higher transmission ratios and to engage both planetary gear sets simultaneously when the ratio of the speed of rotation of the auxiliary shaft relative to the input shaft is such that both planetary gear sets drive the output shaft at the same speed.

Preferably, the transmission ratios of the planetary gear sets are selected such that the planetary gear sets drive the output shaft at the same speed only at the limit of adjustment of the speed of the auxiliary shaft relative to the input shaft.

There have also been proposed in the past transmissions for hybrid electrical vehicles. Such vehicles have an electric motor drive in addition to an internal combustion engine. The engine drives a generator for charging the batteries and is in addition capable of driving the vehicle wheels directly.

The present invention in a second aspect seeks to provide a continuously variable transmission that is suitable for use in a hybrid vehicle.

In accordance with the second aspect of the invention, there is provided a continuously variable transmission of a hybrid electrical vehicle comprising:
- an input shaft connected to an internal combustion engine,
- an auxiliary shaft driven by an electric motor deriving power from a bank of batteries charged by the internal combustion engine, the auxiliary shaft being rotatable by the electric motor with a speed that is continuously variable relative to the speed of rotation of the input shaft, and mechanical gearing for transmitting torque from the input and auxiliary shafts to an output shaft, and
characterised in that :
- the mechanical gearing comprises two planetary gear sets arranged to provide parallel torque paths from the input and auxiliary shafts to the output shaft and coupling means for selectively engaging the planetary gear sets,
- the first planetary gear set, when engaged by the coupling means to transmit torque, comprising a first sun gear connected to the input shaft, a first planetary gear carrier connected to the auxiliary shaft and a first ring gear connected to drive the output shaft,
- the second planetary gear set, when engaged by the coupling means to transmit torque, comprising a second sun gear connected to the auxiliary shaft, a second planetary gear carrier connected to the input shaft and a second ring gear connected to drive the output shaft, and
- the coupling means serving to engage only the first planetary gear set for reverse and lower transmission ratios, to engage only the second planetary gear set for higher transmission ratios and to engage both planetary gear sets simultaneously when the ratio of the speed of rotation of the auxiliary shaft relative to the input shaft is such that both planetary gear sets drive the output shaft at the same speed.

It will be appreciated that the electrical and hydraulic implementations of the invention are analogous to one another in that in both cases the mechanical gearing is called upon to combine the torque from an input shaft, which may rotate with constant speed, with the torque of an auxiliary shaft that rotates with variable speed in either direction relative to the input shaft. The only difference is that in one case the input shaft drives the auxiliary shaft hydraulically and in the other case electrically.

The invention will now be described further, by way of example, with reference to the accompanying drawings, in which:
Figure 1 is a schematic representation of a hydro-mechanical transmission of the invention, and
Figure 2 is a graph that shows the speeds of rotation of the different components of the planetary gear sets.

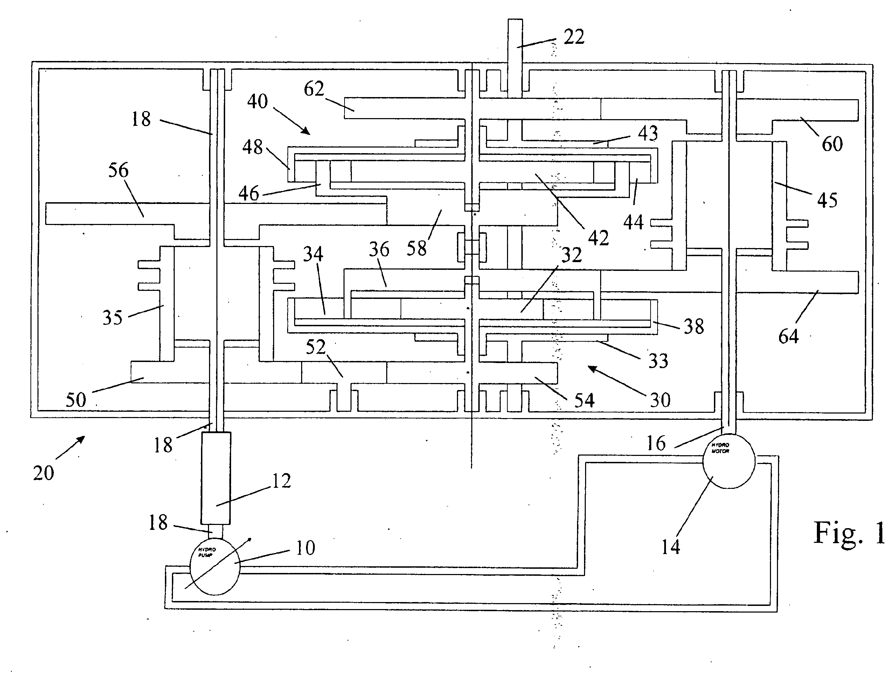

Figure 1 shows a hydro-mechanical transmission of the invention which is intended for use in an agricultural vehicle, such as a tractor. A hydrostatic pump 10 is driven at constant speed by an input shaft 18 constituted by the crankshaft of a diesel engine 12 and in turn drives a hydrostatic motor 14. The motor drives an auxiliary shaft 16 and by adjustment of swash plates of the hydrostatic pump and/or motor the transmission ratio between the auxiliary shaft 16 and the engine crankshaft can be varied. It will be assumed herein that the engine is operated at a constant speed of 2100 rpm and that, by suitable setting of the swash plates, the speed of the auxiliary shaft 16 can be varied continuously from -3000 to +3000 rpm, i.e. from 0 to 3000 rpm in either direction.

The input shaft 18 to the hydrostatic pump is additionally connected to a mechanical gearing unit generally designated 20. The gearing unit 20 is also connected to the auxiliary shaft 16 and has an output shaft 22. The latter output shaft is connected in a conventional manner through a differential to the driving wheels of the vehicle (not shown).

The gearing unit comprises two planetary gear sets that are generally designated 30 and 40, respectively. The first planetary gear set 30 is formed by a sun gear 32, planet gears 34 mounted on a carrier 36 and ring gear 38. Similarly, the second planetary gear set 40 is formed by a sun gear 42, planet gears 44 mounted on a carrier 46 and ring gear 48. External teeth on ring gears 38 and 48 of both planetary gear sets are in permanent driving engagement with the output shaft 22 through gears 33 and 43 fixedly connected to the shaft 22.

The input shaft 18 carries a slidable coupling sleeve 35 that is slidable between different positions to couple the input shaft to one or both of the planetary gear sets 30 and 40, the sleeve 35 being shown in the position in which it is coupled to the first planetary gear set 30. Likewise, the auxiliary shaft 16 carries a slidable coupling sleeve 45 that is slidable between different positions to couple the auxiliary shaft to one or both of the planetary gear sets 30 and 40, the sleeve 45 also being shown in the position in which it is coupled to the first planetary gear set 30.

In the illustrated position of the coupling sleeves 35 and 45, the input shaft 18 is in driving engagement with the sun gear 32 of the first planetary gear set through pinions 50 and 54 and an idler 52. When the coupling sleeve 35 is moved upwards to its other end position, the input shaft 18 is instead connected to the carrier 46 of the second gear set by means of meshing pinions 56, 58. The sun gear 32 of the first planetary gear set 30 rotates in the same direction and with the same speed as the input shaft 18 whereas the carrier 46 of the second planetary gear set rotates at twice the speed in the opposite direction.

In the illustrated position of the sleeve 45, the auxiliary shaft 16 drives the carrier 36 of the first planetary gear set 30 through pinion 64. When the sleeve 45 is moved upwards to its other end position, the auxiliary shaft 16 is instead connected to the sun gear 42 of the second planetary gear set 40, through meshing pinions 60 and 62. The carrier 36 and that sun gear 42 rotate at the same speed as and in the opposite direction to the auxiliary shaft 16.

The two coupling sleeves 35 and 45 have an intermediate position in which drive is transmitted to the output shaft 22 from the input shaft 18 and the auxiliary shaft 16 through both planetary gear sets 30 and 40. This driving of the output shaft through the parallel torque paths of both planetary gear sets can only be allowed under specific conditions, to be described below, when both planetary gear sets drive the output shaft 22 at the same speed. Under all other conditions, only one or other of the planetary gear sets 30, 40 is engaged by moving the coupling sleeves upwards or downwards, as viewed. Downward movement of the sleeves 35 and 45 disengages the sleeves from the pinions 56 and 60 so that the second planetary gear set 40 is disengaged. Conversely, upward movement of the sleeves 35 and 45 uncouples the input and auxiliary shafts from the first planetary gear set 30.

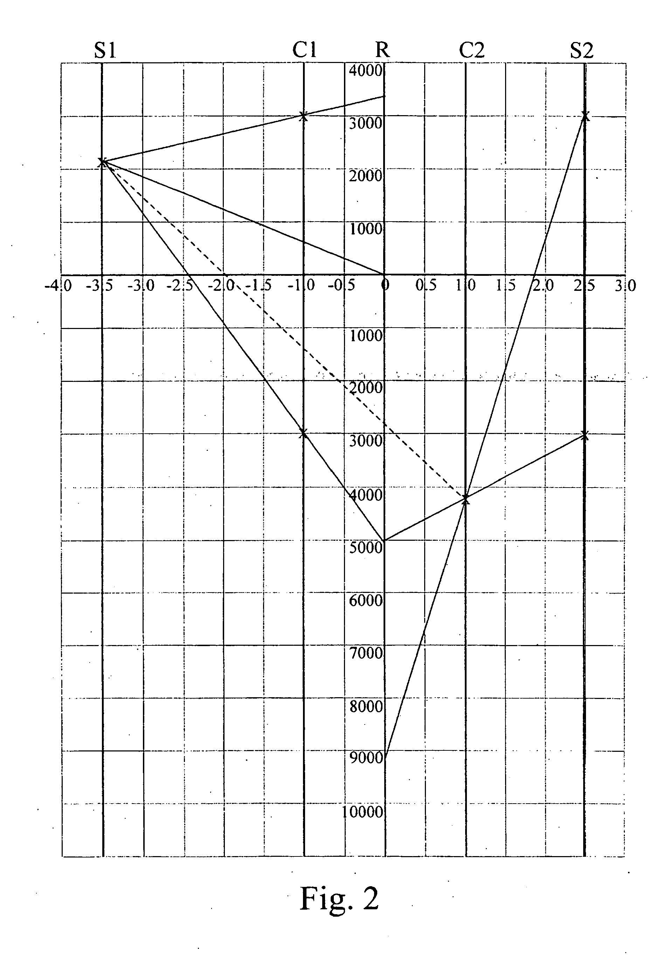

Reference will now be made to Figure 2 to explain the operation of the transmission shown in Figure 1. Figure 2 is a diagram to enable the speed of rotation of any of the rotating elements to be calculated if the speed of the other two is known. In Figure 2, rotational speed is plotted along the vertical axis and the vertical lines S1, C1, R, C2 and S2 represent, respectively, speeds of the sun gear 32, carrier 36, the ring gears 38 and 48 (which have the same number of teeth and rotate at the same speed as one another), the carrier 46 and the sun gear 42. The separation of these vertical lines depends on the gearing ratios within the planetary gear sets. With the line representing the carrier arranged at unit distance from the line of the ring gear, the sun gear is represented by a line spaced from the line of the carrier by the ratio of the number of teeth in the ring gear to the number of teeth on the sun gear.

When rotational speeds plotted along any two of these vertical lines are connected to one another by a straight line, the intersection of that straight line with the third vertical line will indicate the rotational speed of the remaining rotary element of the planetary gear set in question.

In Figure 2, the line R represents the speed of the two ring gears which are connected to the output shaft 22. The lines to the left of line R show how the output speed varies with the speed of the auxiliary shaft when the first planetary gear set 30 is engaged and those to the right of the vertical line R show how the output speed varies with the speed of the auxiliary shaft when the second planetary gear set 40 is engaged.

Considering first the operation of the first planetary gear set 30, here the sun gear is held at 2100 rpm (the speed of the input shaft 18) at all times. The speed of the first carrier 36 on the other hand can be varied from -3000 to +3000 rpm, as earlier assumed. From the lines drawn in Figure 2, it will be seen that the ring gears will rotate with a speed in the range from -3300 rpm to +5000 rpm and will stop when the speed of the carrier is 600 rpm (all these values are approximate).

Considering next the operation of the second planetary gear set 40, here the carrier is driven at a constant speed of -4200 rpm (twice engine speed and in the opposite direction) while the sun gear 42 is driven by the auxiliary shaft 16 at a speed that can vary from +3000 to -3000 rpm. As a result, the ring gears are rotated at speeds from 5000 rpm to 9000 rpm in the direction of forward vehicle travel.

Thus in operation of the vehicle, the first gear set 30 is engaged and the swash plate is moved from a first end position to a second to vary the speed of the vehicle from maximum reverse speed, through zero, to an intermediate forward speed. To increase the forward speed to its maximum value, the second gear set 40 is engaged and the swash plate is moved back to its first end position.

It will be noted that when the auxiliary shaft 16 is rotating at a speed of 3000 rpm then the ring gears are rotated by both planetary gear sets at the same speed of 5000 rpm. This overlap at the limit allows a power shift from one planetary gear set to the other, in that both planetary gear sets can safely be engaged temporarily so that no interruption in power transmission is required during the changeover.

It will be appreciated that any number of gear ratios can be used in the planetary gear sets which will achieve a point of overlap when changeover can take place, more especially since the speed of the carrier 46 of the second planetary gear set can be set at will and need not be exactly double the engine speed. It is preferred however to set the gear ratios of the two planetary gear sets such that the changeover from one to the other occurs at one of the limits of adjustment of the swash plates of the hydrostatic pump and/or motor.

In the preferred embodiment of the invention, the sun gear 32 has twenty teeth and the ring gear 38 has fifty hence the line S1 being at a position 2.5 units away from the line C1. In the second planetary gear set 40, on the other hand, sun gear 42 has thirty four teeth and ring gear 48 has fifty teeth so that the distance of the line S2 from the line C2 is just under 1.5 units.

As it is important that the output shaft should be rotating at a predetermined speed when both planetary gear sets are engaged, it is preferred to provide a shaft speed sensor to initiate a changeover between gear sets instead of relying on the swash plates being at the limits of their adjustment.

As previously mentioned, the invention can be applied to a hybrid electric vehicle. In such a vehicle, the hydraulic pump 10 and motor 14 are replaced by a generator charging a bank of storage batteries and an electric motor powered by the batteries. The engine can operate with constant speed when driving the input shaft 18 and the speed of the auxiliary shaft can be adjusted by control of the electric motor within the same limits as described above.

## Claims

1. A continuously variable transmission comprising :
- an input shaft (18),
- a hydrostatic pump (10) driven by the input shaft (18),
- a hydrostatic motor (14) hydraulically connected to the hydrostatic pump (10) and serving to drive an auxiliary shaft (16) with a continuously variable transmission ratio relative to the input shaft (18), and
- mechanical gearing (20) for transmitting torque from the input and auxiliary shafts (18, 16) to an output shaft (22), and
**characterised in that**:
- the mechanical gearing (20) comprises two planetary gear sets (30, 40) arranged to provide parallel torque paths from the input and auxiliary shafts (18, 16) to the output shaft (22) and coupling means (35, 45) for selectively engaging the planetary gear sets (30, 40),
- the first planetary gear set (30), when engaged by the coupling means (35, 45) to transmit torque, comprising a first sun gear (32) connected to the input shaft (18), a first planetary gear carrier (36) connected to the auxiliary shaft (16) and a first ring gear (38) connected to drive the output shaft (22),
- the second planetary gear set (40), when engaged by the coupling means (35, 45) to transmit torque, comprising a second sun gear (42) connected to the auxiliary shaft (16), a second planetary gear carrier (46) connected to the input shaft (18) and a second ring gear (48) connected to drive the output shaft (22), and
- the coupling means (35, 45) serving to engage only the first planetary gear set (30) for reverse and lower transmission ratios, to engage only the second planetary gear set (40) for higher transmission ratios and to engage both planetary gear sets (30, 40) simultaneously when the ratio of the speed of rotation of the auxiliary shaft (16) relative to the input shaft (18) is such that both planetary gear sets (30, 40) drive the output shaft (22) at the same speed.

2. A transmission according to claim 1, **characterized in that** the transmission ratios of the planetary gear sets (30, 40) are selected such that the planetary gear sets (30, 40) drive the output shaft (22) at the same speed only at the limit of adjustment of the speed of the auxiliary shaft (16) relative to the input shaft (18).

3. A transmission according to claim 1 or 2, **characterized in that**, in the first planetary gear set (30), the number of teeth on the ring gear (38) are substantially in the ratio of 5:2 to the number of teeth on the sun gear (32).

4. A transmission according to any of the preceding claims, **characterized in that**, in the second planetary gear set (40), the number of teeth on the ring gear (48) are substantially in the ratio of 3:2 to the number of teeth on the sun gear (42).

5. A continuously variable transmission of a hybrid electrical vehicle comprising:
- an input shaft (18) connected to an internal combustion engine (12),
- an auxiliary shaft (16) driven by an electric motor deriving power from a bank of batteries charged by the internal combustion engine (12), the auxiliary shaft (16) bering rotatable by the electric motor with a speed that is continuously variable relative to the speed of rotation of the input shaft (18), and
mechanical gearing (20) for transmitting torque from the input and auxiliary shafts (18, 16) to an output shaft (22), and
**characterised in that** :
- the mechanical gearing (20) comprises two planetary gear sets (30, 40) arranged to provide parallel torque paths from the input and auxiliary shafts (18, 16) to the output shaft (22) and coupling means (35, 45) for selectively engaging the planetary gear sets (30, 40),
- the first planetary gear set (30), when engaged by the coupling means (35, 45) to transmit torque, comprising a first sun gear (32) connected to the input shaft (18), a first planetary gear carrier (36) connected to the auxiliary shaft (16) and a first ring gear (38) connected to drive the output shaft (22),
- the second planetary gear set (40), when engaged by the coupling means (35, 45) to transmit torque, comprising a second sun gear (42) connected to the auxiliary shaft (16), a second planetary gear carrier (46) connected to the input shaft (18) and a second ring gear (48) connected to drive the output shaft (22), and
- the coupling means (35, 45) serving to engage only the first planetary gear set (30) for reverse and lower transmission ratios, to engage only the second planetary gear set (40) for higher transmission ratios and to engage both planetary gear sets (30, 40) simultaneously when the ratio of the speed of rotation of the auxiliary shaft (16) relative to the input shaft (18) is such that both planetary gear sets (30, 40) drive the output shaft (22) at the same speed.

6. A transmission according to claim 5, **characterized in that** the transmission ratios of the planetary gear sets (30, 40) are selected such that the planetary gear sets (30, 40) drive the output shaft (22) at the same speed only at the limit of adjustment of the speed of the electric motor relative to the input shaft (18).

7. A transmission according to claim 5 or 6, **characterized in that**, in the first planetary gear set (30), the number of teeth on the ring gear (38) are substantially in the ratio of 5:2 to the number of teeth on the sun gear (32).

8. A transmission according to claim 5, 6 or 7, **characterized in that**, in the second planetary gear set (40), the number of teeth on the ring gear (48) are substantially in the ratio of 3:2 to the number of teeth on the sun gear (42).

9. A transmission according to any of the preceding claims, **characterized in that** a shaft speed sensor is associated with the output shaft (22) for permitting torque to be transmitted through both planetary gear sets (30, 40) only when the speed of the output shaft (22) is at a predetermined value.

## Patentansprüche

1. Stufenlos regelbares Getriebe mit:
- einer Eingangswelle (18);
- einer von der Eingangswelle (18) angetriebenen hydrostatischen Pumpe (10),
- einem hydrostatischen Motor (14), der hydraulisch mit der hydrostatischen Pumpe (10) verbunden ist und zum Antrieb einer Hilfswelle (16) mit einem stufenlos veränderlichen Übersetzungsverhältnis gegenüber der Eingangswelle dient, und
- einer mechanischen Getriebeanordnung (20) zum Übertragen eines Drehmomentes von den Eingangs- und Hilfswellen (18, 16) an eine Ausgangswelle (22), und
**dadurch gekennzeichnet, dass**:
- die mechanische Getriebeanordnung (20) zwei Planetengetriebe-Sätze (30, 30), die so angeordnet sind, dass sie parallele Drehmoment-Pfade von den Eingangs- und Hilfswellen (18, 16) zu der Ausgangswelle (22) ergeben, und Kupplungseinrichtungen (35, 45) zum selektiven Einkuppeln der Planetengetriebe-Sätze (30, 40) umfasst,
- der erste Planetengetriebe-Satz (30) bei seinem Einkuppeln durch die Kupplungseinrichtung (35, 45) zum Übertragen von Drehmoment ein erstes mit der Eingangswelle (18) verbundenes Sonnenrad (32), einen ersten mit der Hilfswelle (16) verbundenen Planetenrad-Träger (36) und ein erstes Hohlrad (38) umfasst, das zum Antrieb der Ausgangswelle (22) angeschlossen ist;
- der zweite Planetengetriebe-Satz (40) bei seinem Einkuppeln durch die Kupplungseinrichtung (35, 45) zum Übertragen von Drehmoment ein zweites mit der Hilfswelle (16) verbundenes Sonnenrad (42), einen zweiten Planetenrad-Träger (46), der mit der Eingangswelle (18) verbunden ist, und ein zweites Hohlrad (48) umfasst, das zum Antrieb der Ausgangswelle (22) angeschlossen ist, und
- die Kupplungseinrichtung (35, 45) zum Einkupplen lediglich des ersten Planetengetriebe-Satzes (30) für Rückwärts-Übersetzungsverhältnisse und niedrigere Übersetzungsverhältnisse, zum Einkupplen lediglich des zweiten Planetengetriebe-Satzes (40) für höhere Übersetzungsverhältnisse und zum gleichzeitigen Einkuppeln beider Planetengetriebe-Sätze (30, 40) dient, wenn das Verhältnis der Drehgeschwindigkeit der Hilfswelle (16) gegenüber der Eingangswelle (18) derart ist, dass beide Planetengetriebe-Sätze (30, 40) die Ausgangswelle (22) mit der gleichen Drehgeschwindigkeit antreiben.

2. Getriebe nach Anspruch 1, **dadurch gekennzeichnet, dass** die Übersetzungsverhältnisse der Planetengetriebe-Sätze (30, 40) derart ausgewählt sind, dass die Planetengetriebe-Sätze (30, 40) die Ausgangswelle (22) mit der gleichen Drehgeschwindigkeit lediglich an der Grenze der Einstellung der Drehgeschwindigkeit der Hilfswelle (16) gegenüber der Eingangswelle (18) antreiben.

3. Getriebe nach Anspruch 1 oder 2, **dadurch gekennzeichnet, dass** in dem ersten Planetengetriebe-Satz (30) die Anzahl der Zähne auf dem Hohlrad (38) im Wesentlichen im Verhältnis von 5:2 zur Anzahl der Zähne des Sonnenrades (32) steht.

4. Getriebe nach einem der vorhergehenden Ansprüche, **dadurch gekennzeichnet, dass** in dem zweiten Planetengetriebe-Satz (40) die Anzahl der Zähne auf dem Hohlrad (48) im Wesentlichen im Verhältnis von 3:2 zur Anzahl der Zähne auf dem Sonnenrad (42) steht.

5. Stufenlos regelbares Getriebe eines elektrischen Hybrid-Fahrzeuges, mit:
- einer Eingangswelle (18), die mit einem Verbrennungsmotor (12) verbunden ist;
- einer Hilfswelle (16), die von einem Elektromotor angetrieben wird, der Leistung von einer Gruppe von Batterien ableitet, die von dem Verbrennungsmotor (12) geladen werden, wobei die Hilfswelle (16) durch den Elektromotor mit einer Drehgeschwindigkeit drehbar ist, die gegenüber der Drehgeschwindigkeit der Eingangswelle (18) stufenlos veränderbar ist, und
- einer mechanischen Getriebeanordnung (20) zum Übertragen eines Drehmomentes von den Eingangs- und Hilfswellen (18, 16) an eine Ausgangswelle (22), und
**dadurch gekennzeichnet, dass**:
- die mechanische Getriebeanordnung (20) zwei Planetengetriebe-Sätze (30, 40), die zur Schaffung paralleler Drehmoment-Pfade von den Eingangs- und Hilfswellen (18, 16) zu einer Ausgangswelle (22) angeordnet sind, und Kupplungseinrichtungen (35, 45) zum selektiven Einkuppeln der Planetengetriebe-Sätze (30, 40) umfasst,
- der erste Planetengetriebe-Satz (30) beim Einkuppeln durch die Kupplungseinrichtung (35, 45) zum Übertragen von Drehmoment ein erstes mit der Eingangswelle (18) verbundenes Sonnenrad (32), einen ersten mit der Hilfswelle (16) verbundenen Planetenrad-Träger (36), und ein erstes Hohlrad (38) umfasst, das zum Antrieb der Ausgangswelle (22) angeschlossen ist,
- der zweite Planetengetriebe-Satz (40) beim Einkuppeln durch die Kupplungseinrichtung (35, 45) zur Übertragung von Drehmoment ein zweites mit der Hilfswelle (16) verbundenes Sonnenrad (42), einem zweiten mit der Eingangswelle (18) verbundenen Planetenrad-Träger (46) und ein zweites Ringzahnrad (48) umfasst, das zum Antrieb der Ausgangswelle (22) angeschlossen ist, und
- die Kupplungseinrichtung (35, 45) zum Einkuppeln lediglich des ersten Planetengetriebe-Satzes (30) für Rückwärts- und niedrigere Getriebeübersetzungsverhältnisse, zum Einkuppeln lediglich des zweiten Planetengetriebe-Satzes (40) für höhere Übersetzungsverhältnisse und zum Einkuppeln beider Planetengetriebe-Sätze (30, 40) gleichzeitig dient, wenn das Verhältnis der Drehgeschwindigkeit der Hilfswelle (16) gegenüber der Eingangswelle (18) derart ist, dass beide Planetengetriebe-Sätze (30, 40) die Ausgangswelle (22) mit der gleichen Drehgeschwindigkeit antreiben.

6. Getriebe nach Anspruch 5, **dadurch gekennzeichnet, dass** die Übersetzungsverhältnisse der Planetengetriebe-Sätze (30, 40) derart ausgewählt sind, dass die Planetengetriebe-Sätze (30, 40) die Ausgangswelle (22) mit der gleichen Drehgeschwindigkeit lediglich an der Grenze der Einstellung der Geschwindigkeit des Elektromotors gegenüber den Eingangswellen (18) antreiben.

7. Getriebe nach Anspruch 5 oder 6, **dadurch gekennzeichnet, dass** in dem ersten Planetengetriebe-Satz (30) die Anzahl der Zähne auf dem Hohlrad (38) im Wesentlichen im Verhältnis von 5:2 zur Anzahl der Zähne auf dem Sonnenrad (32) steht.

8. Getriebe nach Anspruch 5, 6 oder 7, **dadurch gekennzeichnet, dass** in dem zweiten Planetengetriebe-Satz (40) die Anzahl der Zähne auf dem Hohlrad (48) im Wesentlichen im Verhältnis von 3:2 zu der Anzahl der Zähne auf dem Sonnenrad (42) steht.

9. Getriebe nach einem der vorhergehenden Ansprüche, **dadurch gekennzeichnet, dass** ein Wellendrehzahl-Sensor mit der Ausgangswelle (22) verbunden ist, um die Übertragung eines Drehmomentes durch beide Planetengetriebe-Sätze (30, 40) nur dann zuzulassen, wenn die Drehzahl der Ausgangswelle (22) einen vorgegebenen Wert aufweist.

## Revendications

1. Transmission à variation continue comprenant :
- un arbre d'entrée (18),
- une pompe hydrostatique (10) entraînée par l'arbre d'entrée (18),
- un moteur hydrostatique (14) relié hydrauliquement à la pompe hydrostatique (10) et servant à entraîner un arbre auxiliaire (16) avec un rapport de transmission variable en continu relativement à l'arbre d'entrée (18), et
- un ensemble mécanique d'engrenages (20) destiné à transmettre le couple des arbres d'entrée et auxiliaire (18, 16) à un arbre de sortie (22), et
**caractérisée en ce que** :
- l'ensemble mécanique d'engrenages (20) comprend deux trains planétaires (30, 40) disposés pour fournir des voies de couple parallèles à partir des arbres d'entrée et auxiliaire (18, 16) vers l'arbre de sortie (22) et des moyens d'accouplement (35, 45) pour mettre en prise sélectivement les trains planétaires (30, 40),
- le premier train planétaire (30), lorsqu'il est mis en prise par les moyens d'accouplement (35, 45) pour transmettre le couple, comprenant un premier pignon planétaire (32) relié à l'arbre d'entrée (18), un premier porte-satellites (36) relié à l'arbre auxiliaire (16) et une première couronne (38) reliée pour entraîner l'arbre de sortie (22),
- le second train planétaire (40), lorsqu'il est mis en prise par les moyens d'accouplement (35, 45) pour transmettre le couple, comprenant un second pignon planétaire (42) relié à l'arbre auxiliaire (16), un second porte-satellites (46) relié à l'arbre d'entrée (18) et une seconde couronne (48) reliée pour entraîner l'arbre de sortie (22), et
- les moyens d'accouplement (35, 45) servent à mettre en prise uniquement le premier train planétaire (30) pour des rapports de transmission de marche arrière et inférieurs, à mettre en prise uniquement le second train planétaire (40) pour des rapports de transmission supérieurs et à mettre en prise les deux trains planétaires (30, 40) simultanément lorsque le rapport de la vitesse de rotation de l'arbre auxiliaire (16) relativement à l'arbre d'entrée (18) est tel que les deux trains planétaires (30, 40) entraînent l'arbre de sortie (22) à la même vitesse.

2. Transmission selon la revendication 1, **caractérisée en ce que** les rapports de transmission des trains planétaires (30, 40) sont sélectionnés de telle manière que les trains planétaires (30, 40) entraînent l'arbre de sortie (22) à la même vitesse uniquement à la limite de réglage de la vitesse de l'arbre auxiliaire (16) relativement à l'arbre d'entrée (18).

3. Transmission selon la revendication 1 ou 2, **caractérisée en ce que**, dans le premier train planétaire (30), le nombre de dents de la couronne (38) est sensiblement dans un rapport de 5 : 2 vis-à-vis du nombre de dents du premier pignon planétaire (32).

4. Transmission selon l'une quelconque des revendications précédentes, **caractérisée en ce que**, dans le second train planétaire (40), le nombre de dents de la couronne (48) est sensiblement dans un rapport de 3 : 2 vis-à-vis du nombre de dents du premier pignon planétaire (42).

5. Transmission à variation continue d'un véhicule électrique hybride comprenant :
- un arbre d'entrée (18) relié à un moteur à combustion interne (12),
- un arbre auxiliaire (16) entraîné par un moteur électrique tirant l'énergie d'un bloc de batteries chargées par le moteur à combustion interne (12), l'arbre auxiliaire (16) pouvant être mis en rotation par le moteur électrique à une vitesse variable continue relativement à la vitesse de rotation de l'arbre d'entrée (18), et
- un ensemble mécanique d'engrenages (20) destiné à transmettre le couple des arbres d'entrée et auxiliaire (18, 16) à un arbre de sortie (22), et
**caractérisée en ce que**
- l'ensemble mécanique d'engrenages (20) comprend deux trains planétaires (30, 40) disposés pour fournir des voies de couple parallèles à partir des arbres d'entrée et auxiliaire (18, 16) vers l'arbre de sortie (22) et des moyens d'accouplement (35, 45) pour mettre en prise sélectivement les trains planétaires (30, 40),
- le premier train planétaire (30), lorsqu'il est mis en prise par les moyens d'accouplement (35, 45) pour transmettre le couple, comprenant un premier pignon planétaire (32) relié à l'arbre d'entrée (18), un premier porte-satellites (36) relié à l'arbre auxiliaire (16) et une première couronne (38) reliée pour entraîner l'arbre de sortie (22),
- le second train planétaire (40), lorsqu'il est mis en prise par les moyens d'accouplement (35, 45) pour transmettre le couple, comprenant un second pignon planétaire (42) relié à l'arbre auxiliaire (16), un second porte-satellites (46) relié à l'arbre d'entrée (18) et une seconde couronne (48) reliée pour entraîner l'arbre de sortie (22), et
- les moyens d'accouplement (35, 45) servent à mettre en prise uniquement le premier train planétaire (30) pour des rapports de transmission de marche arrière et inférieurs, à mettre en prise uniquement le second train planétaire (40) pour des rapports de transmission supérieurs et à mettre en prise les deux trains planétaires (30, 40) simultanément lorsque le rapport de la vitesse de rotation de l'arbre auxiliaire (16) relativement à l'arbre d'entrée (18) est tel que les deux trains planétaires (30, 40) entraînent l'arbre de sortie (22) à la même vitesse.

6. Transmission selon la revendication 5, **caractérisée en ce que** les rapports de transmission des trains planétaires (30, 40) sont sélectionnés de telle manière que les trains planétaires (30, 40) entraînent l'arbre de sortie (22) à la même vitesse uniquement à la limite de réglage de la vitesse de l'arbre auxiliaire (16) relativement à l'arbre d'entrée (18).

7. Transmission selon la revendication 5 ou 6, **caractérisée en ce que**, dans le premier train planétaire (30), le nombre de dents de la couronne (38) est sensiblement dans un rapport de 5 : 2 vis-à-vis du nombre de dents du premier pignon planétaire (32).

8. Transmission selon les revendication 5, 6 ou 7, **caractérisée en ce que**, dans le second train planétaire (40), le nombre de dents de la couronne (48) est sensiblement dans un rapport de 3 : 2 vis-à-vis du nombre de dents du premier pignon planétaire (42).

9. Transmission selon l'une quelconque des revendications précédentes, **caractérisée en ce qu'**un détecteur de vitesse d'arbre est relié à l'arbre de sortie (22) pour permettre de transmettre le couple à la fois par les deux trains planétaires (30, 40) uniquement lorsque la vitesse de l'arbre de sortie (22) est à une valeur prédéterminée.
